# EUROPEAN PATENT APPLICATION

(11) **EP 1 617 582 A1**
(43) Date of publication of application: **18.01.2006**
(21) Application number: 03780805.2
(22) Date of filing: 16.12.2003
(51) Int. Cl.: H04J 11/00

(54) **MULTI-CARRIER COMMUNICATION APPARATUS**

(30) Priority: 23.04.2003 JP 2003118767
(71) Applicant: MATSUSHITA ELECTRIC INDUSTRIAL CO., LTD., Kadoma-shi, Osaka 571-8501 (JP)
(72) Inventor: FUJIMOTO, Kazuhisa, Yokohama-shi, Kanagawa 224-0055 (JP)
(74) Representative: Grünecker, Kinkeldey, Stockmair & Schwanhäusser Anwaltssozietät
(86) International application number: PCT/JP2003/016127
(87) International publication number: WO 2004/095748

(57) **Abstract**

In a multi-carrier communication apparatus, it is an object of the invention to increase the amount of data per unit time greatly with the band width kept unchanged. A modulator (102) sequentially performs primary modulation of data (101) which are first transmitted data on the basis of, for example, QPSK modulation. A pattern generating unit (104) generates a pattern of particular signals which is to be allocated to sub-carriers of a matrix formed by arranging a plurality of sub-carriers arranged in the direction of a frequency axis into a plurality of symbols in the direction of a time axis. The pattern is determined based on data (103) which are second transmitted data. A mapping unit (105) allocates the sub-carriers modulated by the data (101) at the modulator (102) and the pattern of the particular signals to the sub-carriers of the matrix.

## Description

### Technical Field

The present invention relates to a multi-carrier communication apparatus which performs communication using a plurality of sub-carriers.

### Background Art

Recently, in accordance with the advance of broad band communications, expectations for radio communication apparatus capable of instantaneous and stable transmission of a large amount of data and the development of such apparatus are increased. In particular, multi-carrier transmission systems for transmitting data using a plurality of sub-carriers are recently in the focus of attention for their excellent features including capability of reducing interferences of delayed waves in multiple paths, the feature originating in the use of a plurality of sub-carriers which allows symbols to be transmitted at a low rate by each sub-carrier.

Orthogonal frequency division multiplexing (OFDM) is a type of multi-carrier transmission systems. The orthogonal frequency division multiplexing has system in which all sub-carriers are orthogonal to each other and adjoining sub-carriers are overlapped. The orthogonal frequency division multiplexing is adopted and is being put in practical use in terrestrial digital broadcasts and WLANs of a 5 GHz band (IEEE 802.11 a) for its extremely high spectral efficiency.

Multi-carrier transmission according to the related art will now be described.

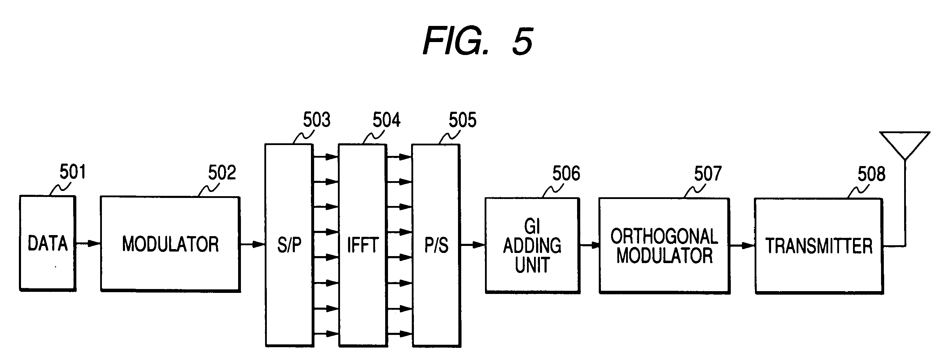

Fig. 5 shows an example of a configuration of a transmission apparatus according to the related art utilizing orthogonal frequency division multiplexing that is a type of multi-carrier transmission.

In the transmission apparatus according to the related art shown in Fig. 5, data 501 to be transmitted are subjected to primary modulation by a modulator 502 which utilizes, for example, the QPSK modulation method. A complex signal obtained by the primary modulation at the modulator 502 is subjected to serial-to-parallel conversion by a serial-to-parallel converter 503, then, rearranged according to the arrangement of sub-carries in the direction of a frequency axis, and thereafter subjected to inverse Fourier transformation by an IFFT 504. The data which have been subjected to inverse Fourier transformation are converted into complex data in the direction of a time axis by a parallel-to-serial converter 505 which performs parallel-to-serial conversion. A GI adding unit 506 adds a guard interval GI for avoiding interferences between symbols attributable to delayed waves to the data which are thereafter put on a carrier wave by an orthogonal modulator 507 and are transmitted by a transmitter 508.

As thus described, complex data in the direction of a time axis which have been subjected to inverse Fourier transformation by the IFFT 504 and added with a guard interval GI constitutes one OFDM symbol, and subsequent OFDM symbols are sequentially repeated in units depending on the size of the inverse Fourier transformation.

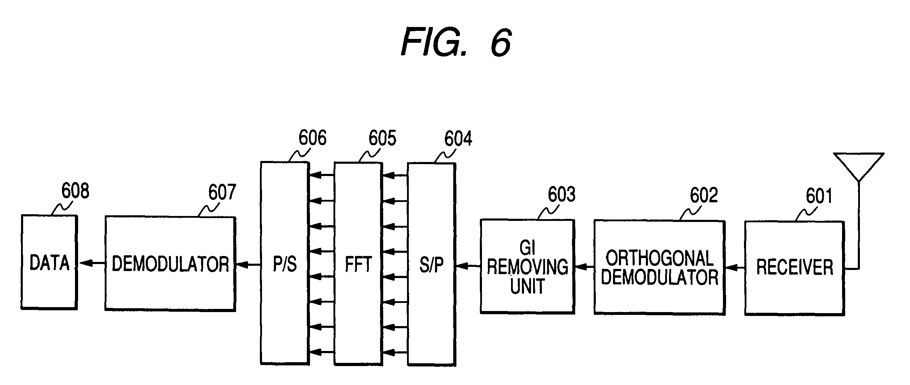

Fig. 6 shows an example of a configuration of a reception apparatus according to the related art utilizing orthogonal frequency division multiplexing that is a type of multi-carrier transmission.

In the reception apparatus according to the related art shown in Fig. 6, signals received by a receiver 601 are converted into in-phase components I and orthogonal components Q by an orthogonal demodulator 602. Thereafter, synchronization of the OFDM symbols is established, and guard intervals GI which are unnecessary for demodulation are removed by a GI removing unit 603. The complex signals from which guard intervals GI are removed are subjected to serial-to-parallel conversion by an S/P 604. Thereafter, the complex signals are converted into complex signals associated with sub-carriers in the direction of a frequency axis by an FFT 605 which performs Fourier transformation. Finally, the complex signals associated with the arrangement of sub-carriers in the direction of the frequency axis are subjected to parallel-to-serial conversion by a P/S 606. The signals are then QPSK-demodulated by, for example, a demodulator 607 to obtain data 608 which are received data.

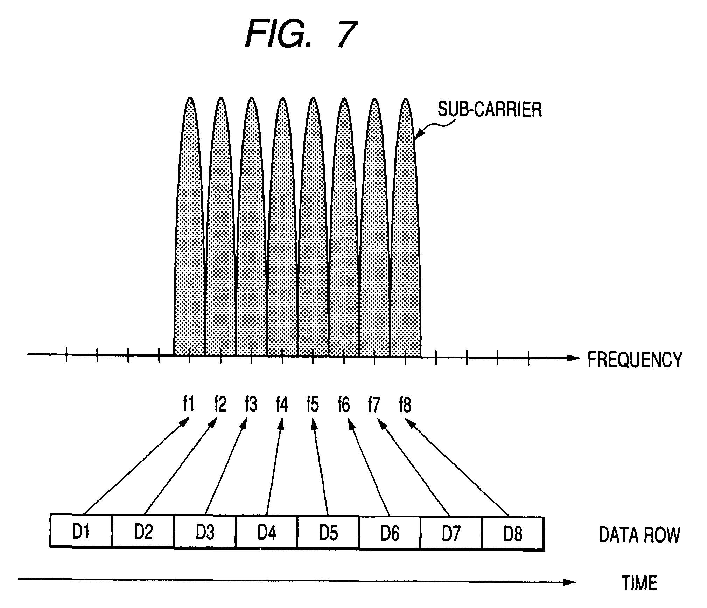

The use of Fourier transformation in generating orthogonal multiple carriers in such a manner is most characteristic of orthogonal frequency division multiplexing. In normal orthogonal frequency division multiplexing, for example, data to be transmitted in time series which have are modulated by allocating them to sub-carriers which have respective frequencies f1 to f8 and which are orthogonal to each other as shown in Fig. 7 to be described later. This process will be described with reference to Fig. 7.

Fig. 7 is a diagram for explaining a relationship between data and sub-carriers in a multi-carrier communication apparatus according to the related art.

As shown in Fig. 7, data D1 to D8 to be modulated that are input in time sequence are simply allocated to sub-carriers having respective frequencies f1 to f8 and are subjected to inverse Fourier transformation to generate one OFDM symbol.

For example, techniques for increasing the amount of data that can be transmitted using one OFDM symbol include proposals in which first data are allocated to a combination itself of ten sub-carriers selected from among sixteen sub-carriers and in which second data are allocated to each of the selected ten sub-carriers, the proposal being aimed at increasing the amount of data that can be transmitted and reducing a peak-to-average power ratio PAPR of the transmitted wave through a resultant reduction in the number of sub-carriers (see Patent Document 1, for example). This technique makes it possible to improve the power efficiency of a power amplifier that forms a part of a radio unit because it allows a reduction in the number of sub-carriers when the amount of data to be transmitted is unchanged and allows the peak-to-average power ratio PAPR of the transmitted wave to be improved.

### Patent Document 1: JP-A-2001-148678

In the multi-carrier communication apparatus disclosed in Patent Document 1, however, since first data are allocated to the pattern of a combination of an arbitrary number of sub-carriers selected from among sub-carriers arranged in the direction of a frequency axis, the amount of the first data can be increased only to a maximum that is within the range of the number of sub-carriers in the direction of the frequency axis. Therefore, a limit has existed for the increase in the amount of data that can be transmitted using one OFDM symbol.

For example, ₈C₇ = 8 = 2³ combinations (C represents combination) are available for selection of seven sub-carriers from among eight sub-carriers, and three bits of data can therefore be transmitted as first data. With the multi-carrier communication apparatus disclosed in Patent Document 1, the amount of data transmitted can be increased by only three bits when compared to that achievable with general multi-carrier transmission systems in which data are transmitted by allocating them only to each of the eight sub-carriers.

The invention is made taking the above-described situation into consideration, and it is an object of the invention to provide a multi-carrier communication apparatus capable of greatly increasing the amount of data transmitted or received per unit time with the frequency band width kept unchanged.

### Disclosure of the Invention

A multi-carrier communication apparatus according to the invention is a multi-carrier communication apparatus for transmitting data using a plurality of sub-carriers, comprising a determining unit which determines a pattern of particular signals associated with first data, an allocating unit which allocates the determined pattern to sub-carriers of a matrix that is formed by arranging a plurality of sub-carriers arranged in the direction of a frequency axis in the direction of a time axis, an allocating unit which allocates sub-carriers modulated by second data to the part of the matrix other than the particular signals, and a transmitting unit which transmits the particular signals allocated to the matrix and the sub-carriers modulated by the second data.

With this configuration, the first data associated with the pattern of the particular signals allocated to the sub-carriers of the matrix and the second data that are the modulated sub-carriers allocated to the part of the matrix other than the particular signals are transmitted to a receiving end.

The amount of the first data which can be transmitted within a time that is determined by the number of symbols in the direction of the time axis of the matrix is determined by the number of patterns of the particular signals. The number of the patterns is the number of combinations available for selection of an arbitrary number of elements from among the matrix, and the number of the combinations greatly increases depending on the size of the matrix.

Therefore, the amount of the first data that can be transmitted can be greatly increased by increasing the number of the sub-carriers in the direction of the frequency axis and the number of the symbols in the direction of the time axis of the matrix. It is thus possible to transmit a great volume of data. Therefore, the amount of data transmitted per one symbol time consequently increases, which allows an increase in the amount of data transmitted per unit time.

A multi-carrier communication apparatus according to the invention comprises a detecting unit which detects a pattern of particular signals associated with first data which are allocated to sub-carriers of a matrix formed by arranging a plurality of sub-carriers arranged in the direction of a frequency axis obtained from received data in the direction of a time axis, a restoring unit which restores the first data associated with the detected pattern, and a demodulating unit which demodulates second data from sub-carriers which have been modulated by the second data that are allocated to the part of the matrix other than the particular signals.

This configuration allows reception of the first data associated with the pattern of the particular signals allocated to the sub-carriers of the matrix and the second data that are the modulated sub-carriers allocated to the part of the matrix other than the particular signals.

The amount of the first data which can be transmitted within a time that is determined by the number of symbols in the direction of the time axis of the matrix is determined by the number of patterns of the particular signals. The number of the patterns is the number of combinations available for selection of an arbitrary number of elements from among the matrix, and the number of the combinations greatly increases depending on the size of the matrix. Therefore, the amount of the first data that can be received greatly increases accordingly.

Thus, the amount of the first data that can be received greatly increases, the greater the number of the sub-carriers in the direction of the frequency axis and the number of the symbols in the direction of the time axis of the matrix. It is thus possible to receive a great volume of data. Therefore, the amount of data received per one symbol time consequently increases, which allows an increase in the amount of data received per unit time.

In a multi-carrier communication apparatus according to the invention, each of the plurality of sub-carriers arranged in the direction of the frequency axis has an orthogonal relationship with a sub-carrier adjacent thereto.

In this configuration, since no interference occurs even though the sub-carriers are arranged adjacent to each other, the number of sub-carriers can be increased by reducing the intervals at which the sub-carriers are arranged, which makes it possible to increase the amount of data communicated with the frequency band width kept unchanged.

### Brief Description of the Drawings

Fig. 1 shows a schematic configuration of a multi-carrier communication apparatus for explaining a first embodiment of the invention;
Fig. 2 shows a matrix formed by a plurality of sub-carriers arranged in the direction of a frequency axis and a plurality of OFDM symbols arranged in the direction of a time axis in the multi-carrier communication apparatus for explaining the first embodiment of the invention;
Fig. 3 shows waveforms of sub-carriers associated with respective elements of the matrix of a plurality of sub-carriers arranged in the direction of the frequency axis and a plurality of OFDM symbols arranged in the direction of the time axis in the multi-carrier communication apparatus for explaining the first embodiment of the invention;
Fig. 4 shows a schematic configuration of a multi-carrier communication apparatus for explaining a second embodiment of the invention;
Fig. 5 shows an example of a configuration of a transmission apparatus according to the related art utilizing orthogonal frequency division multiplexing that is a type of multi-carrier transmission;
Fig. 6 shows an example of a reception apparatus according to the related art utilizing orthogonal frequency division multiplexing that is a type of multi-carrier transmission; and
Fig. 7 is a diagram for explaining a relationship between data and sub-carriers in a multi-carrier communication apparatus according to the related art.

Reference numerals 101, 102, 103, 104, 105, 106, 107, 108, and 110 in the figures represent an item of data (first transmitted data), a modulator, another item of data (second transmitted data), a pattern determination unit, a mapping unit, an IFFT, a P/S, a GI adding unit, and a transmission unit, respectively.

### Best Modes for Carrying Out the Invention

Embodiments of the invention will now be described with reference to the drawings.

### (First embodiment)

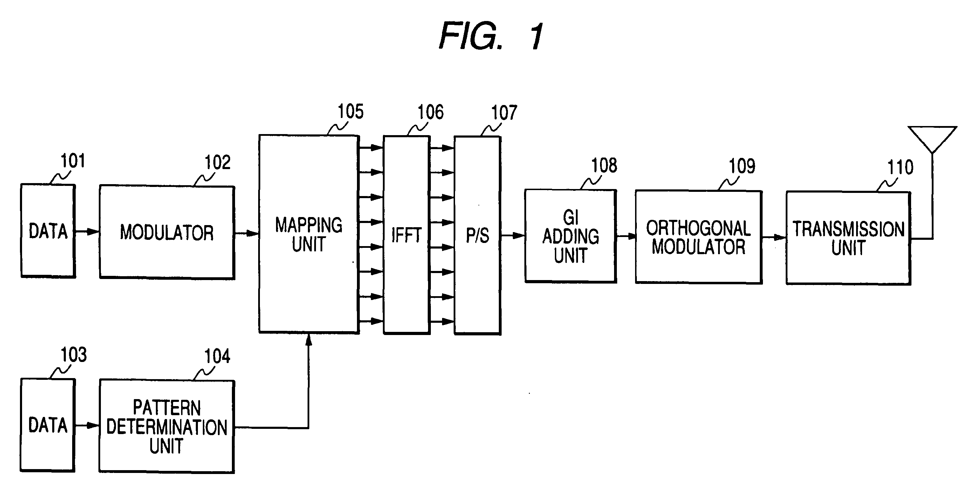

Fig. 1 shows a schematic configuration of a multi-carrier communication apparatus for explaining a first embodiment of the invention.

The multi-carrier communication apparatus includes a modulator 102, a pattern determination unit 104 for determining a pattern of particular signals to be described later, a mapping unit for allocating signals, an IFFT 106 for performing inverse Fourier transformation, a P/S 107 for converting a parallel signal into a serial signal, a GI adding unit 108 for adding a guard interval GI to a signal, an orthogonal modulator 109, and a transmission unit 110.

The modulator 102 maps the data 101 which are first data to be transmitted onto a complex plane to modulate sub-carriers. Based on data 103 which are second input data, the pattern determination unit 104 determines a pattern of particular signals associated with the data 103 to be allocated to sub-carriers of a matrix formed by arranging a plurality of sub-carriers arranged in the direction of a frequency axis into an array in the direction of a time axis to accommodate a plurality of OFDM symbols. The particular signals may be sub-carriers which have been modulated according to a certain modulation method or null signals which involve no sub-carriers.

The mapping unit 105 allocates the pattern of the particular signals determined by the pattern determination unit 104 to the matrix and allocates sub-carriers which have been modulated by the data 101 to the elements of the matrix other than the pattern of the particular signals.

The above-mentioned matrix will now be described with reference to drawings.

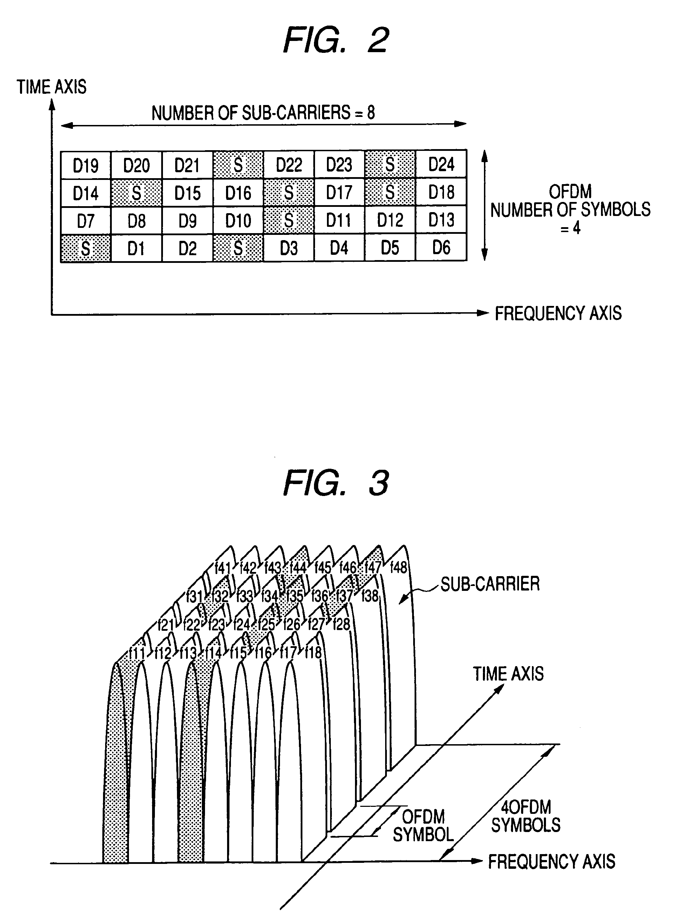

Fig. 2 shows the matrix formed by a plurality of sub-carriers arranged in the direction of the frequency axis and a plurality of OFDM symbols arranged in the direction of the time axis. Fig. 3 shows waveforms of sub-carriers corresponding to the elements of the matrix formed by the plurality of sub-carriers arranged in the direction of the frequency axis and the plurality of OFDM symbols arranged in the direction of the time axis. Figs. 2 and 3 show an example in which the number of sub-carriers in the direction of the frequency axis is 8, and the number of OFDM symbols is 4.

In Fig. 2, D1 to D24 represent areas to which the sub-carriers modulated by the data 101 are allocated, and S represents areas to which the pattern of the particular signals is allocated. The data 101 are the first data. The allocated positions and number of the areas S are varied on the basis of the data 103 input to the pattern determination unit 104. The matrix as shown in Fig. 2 is stored as a data table in a memory incorporated in the multi-carrier communication apparatus, and a configuration may be employed, in which the contents of the table (the number of sub-carriers and the number of OFDM symbols) can be freely changed.

The IFFT 106 performs inverse Fourier transformation on the particular signals and sub-carriers allocated to the matrix by the mapping unit 105 to transform them into OFDM symbols in the direction of the time axis one at a time, and the signals in the direction of the frequency axis are thus transformed into signals in the direction of the time axis.

The P/S 107 converts the parallel signals in the direction of the time axis output by the IFFT 106 into serial signals in the direction of the time axis. The GI adding unit 108 adds GIs to the signals output by the P/S 107 to suppress an interference of a delayed wave attributable to multiple paths. The orthogonal modulator 109 performs orthogonal modulation of a carrier wave using the signals added with Gls at the Gl adding unit 108. The transmission unit 110 amplifies the power of signals output by the orthogonal modulator 109 and transmits the output signals into the air.

The multi-carrier communication apparatus according to this embodiment of the invention employs the orthogonal frequency division multiplexing in which all sub-carriers transmitted are in an orthogonal relationship with each other and in which adjoining sub-carriers are overlapped with each other.

An operation of the multi-carrier communication apparatus shown in Fig. 1 will now be described.

The multi-carrier communication apparatus sequentially performs primary modulation of the data 101 which are the first data to be transmitted on the basis of, for example, QPSK modulation (to thereby obtain sub-carriers which have been subjected to primary modulation using the data 101). In the case of QPSK modulation, since the data are mapped to, for example, four symbols (1, 1), (-1, 1), (1, -1), and (-1, -1) on a complex plane, two bits of data can be carried by (modulated into) one symbol.

The multi-carrier communication apparatus determines a pattern of particular signals allocated to sub-carriers of the matrix based on the data 103 which is second input data to be transmitted and allocates the sub-carriers modulated by the data 101 and the particular signals to the matrix according to the determined pattern.

The signals (the sub-carriers and the particular signals) allocated to the matrix as described above are inverse- Fourier-transformed in the direction of the time axis into one OFDM symbol at a time. They are thus transformed into serial signals and transmitted into the air on a carrier wave after Gls are inserted.

The amount of data which can be transmitted by the multi-carrier communication apparatus shown in Fig. 1 will now be described with reference to Figs. 2 and 3.

When the number of sub-carriers and the number of symbols are 8 and 4, respectively, as shown in Figs. 2 and 3, the matrix formed will have 32 elements. The number of combinations available for the allocation of, for example, eight particular signals to each of the elements of the matrix is ₃₂C₈ = 10518300. That is, the eight particular signals can be allocated to the matrix in 10518300 different patterns (> 2^{23.3}), and 23.3 bits of data can be transmitted as the second data.

Since the number of sub-carriers modulated by the data 101 and allocated to the matrix is 32 - 8 = 24, the amount of data transmitted by the sub-carriers is 24 x 2 bits = 48 bits. Therefore, the multi-carrier communication apparatus shown in Fig. 1 can transmit 23.3 bits of data represented by the patterns of the particular signals and 48 bits modulated into 24 sub-carriers, i.e., 71.3 bits of data in total.

Here, it is compared the multi-carrier communication apparatus shown in Fig. 1 and the multi-carrier communication apparatus disclosed in Patent Document 1. For example, the comparison will be made on an assumption that the number of sub-carriers is 8 that is the same as in the above-described example; the number of sub-carriers selected is 6; and the frequency band width and the number of OFDM symbols are the same as those in the above-described example.

In this case, the multi-carrier communication apparatus disclosed in Patent Document 1 can transmit ₈C₆ patterns (which substantially equal 4.8 bits) of data determined by the number of combinations for selection of six from among the eight sub-carriers and data allocated to each of the six sub-carriers selected or 2 bits x 6 = 12 bits of data. That is, 16.8 bits of data can be transmitted in total with one OFDM symbol. Therefore, the amount of data that the multi-carrier communication apparatus disclosed in Patent Document 1 can transmit with four OFDM symbols is 16.8 bits x 4 = 67.2 bits.

It will be understood from above that the amount of data which can be transmitted by the multi-carrier communication apparatus in the this embodiment of the invention is greater than that of the related art by 4.1 bits (17 times or more in terms of data volume) or more. The amount of data that can be transmitted by the multi-carrier communication apparatus shown in Fig. 1 is greater, by 7.3 bits (157 times in terms of data volume) or more, than the amount of data (2 bits x 32 = 64 bits) which can be transmitted using a general multi-carrier transmission system in which data are allocated to each of the six sub-carriers only.

As described above, in the embodiment of the invention, patterns of particular signals determined in association with the data 103 are allocated to a matrix having a plurality of columns and rows formed by a plurality of sub-carriers arranged in the direction of a frequency axis and a plurality of symbols arranged in the direction of a time axis to allow data to be transmitted in a number of bits which depends on the number of combinations of the patterns. The number of patterns of the particular signals greatly increases the greater the size of the matrix becomes, and this allows a great increase in the amount of second data 103 that can be transmitted. Thus, a much greater amount of data can be transmitted compared to the related art.

In the embodiment of the invention, since 71.3 bits of data can be transmitted with four OFDM symbols as described in the above example, the amount of data that can be transmitted per unit time (one OFDM symbol) is 17.8 bits. The amount of data transmitted per unit time by a multi-carrier communication apparatus according to the related art is 16 bits or 16.8 bits under the same conditions, which indicates that the amount of data transmitted per unit time can be increased by nearly 1 bit and that data can therefore be transmitted more efficiently.

In the embodiment of the invention, the numbers of sub-carriers in the direction of the frequency axis and OFDM symbols in the direction of the time axis forming the matrix and the number of the particular signals are not limited to those in the above-described example, and they may be arbitrarily set within respective allowable ranges.

The method of modulation used in the modulator 102 in the embodiment of the invention is not limited to the QPSK method (2bits/symbol), and any modulation method such as BPSK (1 bitlsymbol), 8PSK (3 bits/symbol), 16QAM (4 bits/symbol) or 64QAM (6 bits/symbol) may be chosen as long as the modulation methods allows data to be mapped onto a complex plane.

Advantages similar to those described above can be achieved when primary modulation is followed by spread spectrum multiplexing as in the case of multi-carrier DS-CDMA (MC/DS-CDMA) in which primary modulation by the modulator 102 in the embodiment of the invention is directly followed by spread spectrum multiplexing to perform orthogonal frequency division multiplexing.

When sub-carriers which have been subjected to a particular modulation method are used as the particular signals, it is only required that the modulation method can be distinguished from the modulation method used in the modulator 102, and any method of modulation may be employed as long as such a requirement is satisfied.

### (Second Embodiment)

A multi-carrier communication apparatus for explaining a second embodiment of the invention serves as a receiver for receiving signals transmitted by the multi-carrier communication apparatus descried in the first embodiment of the invention.

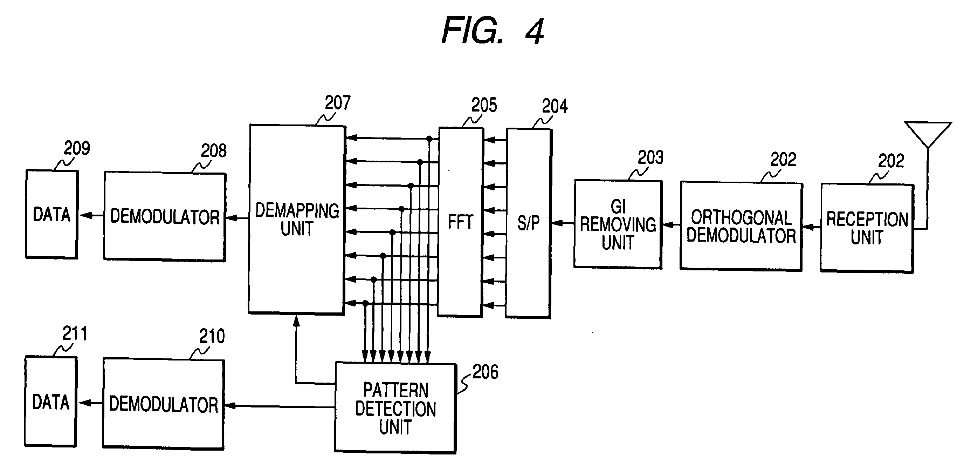

Fig. 4 shows a schematic configuration of the multi-carrier communication apparatus for explaining the second embodiment of the invention.

In the same figure, the multi-carrier communication apparatus includes a reception unit 201 for receiving signals from the outside, an orthogonal demodulator 202, a GI removing unit 203 for removing Gls from the signals, a S/P converter 204 for converting serial signals into parallel signals, an FFT 205 which performs Fourier transformation, a pattern detection unit 206 for detecting patterns of particular signals, a demapping unit 207, a demodulator 208, and another demodulator 210.

The orthogonal demodulator 202 converts signals received by the reception unit 201 into in-phases component I and orthogonal components Q. The GI removing unit 203 establishes synchronization between OFDM symbols and removes the guard intervals GI from signals output by the orthogonal demodulator 202. The S/P converter 204 converts signals in the direction of a time axis from which guard intervals GI have been removed into parallel signals. The FFT 205 performs Fourier transformation of the parallel signals in the direction of the time axis output by the S/P converter 204 to transform them into a plurality of sub-carriers arranged in the direction of a frequency axis.

The pattern detection unit 206 detects a pattern of particular signals allocated to sub-carriers in the form of a matrix formed by arranging a plurality of sub-carriers arranged in the direction of the frequency axis output by the FFT 205 into a plurality of symbols arranged in the direction of the time axis in the order in which the sub-carriers are received.

The demapping unit 207 removes the particular signals allocated to the matrix based on the pattern of the particular signals detected by the pattern detection unit 206 and rearranges each of the sub-carriers which have been allocated to the remaining part of the matrix and which have been modulated by first transmitted data in the order in which the sub-carriers are to be demodulated.

The demodulator 208 demodulates the sub-carriers which have been rearranged by the demapping unit 207 to obtain first received data (data 209) which are identical to the first transmitted data. The demodulator 210 restores second received data (data 211) which are identical to second transmitted data associated with the pattern of the particular signals detected by the pattern detection unit 206.

The multi-carrier communication apparatus in the embodiment of the invention employs orthogonal frequency division multiplexing in which all sub-carriers received are in an orthogonal relationship with each other and in which adjoining sub-carriers are overlapped with each other.

An operation of the multi-carrier communication apparatus shown in Fig. 4 will now be described.

Signals received from the multi-carrier communication apparatus shown in Fig. 1 are converted into signals having in-phase components I and orthogonal components Q, and guard intervals GI are removed from the signals after synchronization of OFDM symbols is established. The signals from which guard intervals GI have been removed are converted into parallel signals which are subjected to Fourier transformation to be transformed into signals in the direction of the frequency axis.

Thereafter, the pattern of the particular signals allocated to sub-carriers in a matrix (see Fig. 2) formed by arranging a plurality of sub-carriers arranged in the direction of the frequency axis that are the Fourier-transformed signals into an array of a plurality of symbols in the direction of the time axis in the order in which the sub-carriers have been received.

When the pattern of the particular signals is detected, the particular signals are removed from the matrix based on the pattern, and the sub-carriers left on the matrix are rearranged in the order in which they are to be demodulated. Thus, the first transmitted data (first received data) are demodulated, and the second transmitted data (second received data) associated with the pattern of the particular signals are restored.

As described above, in the embodiment of the invention, signals transmitted by the multi-carrier communication apparatus described in the first embodiment of the invention are received; the pattern of particular signals associated with data 103 is detected from a matrix as shown in Fig. 2 formed based on the signals; and second received data can be obtained by restoring the data 103 associated with the pattern of the particular signals thus detected. As thus described, the multi-carrier communication apparatus described in the embodiment of the invention receives data transmitted by the multi-carrier communication apparatus shown in Fig. 1 and can obtain first transmitted data and second transmitted data from the data. It is therefore possible to increase the amount of data that can be received dramatically.

Any modulation method such as BPSK (1 bit/symbol), 8PSK (3 bits/symbol), 16QAM (4 bits/symbol) or 64QAM (6 bits/symbol) may be chosen the modulation method used in the demodulator 208 in the embodiment of the invention.

When a communication system is configured using the multi-carrier communication apparatus shown in Figs. 1 and 2 and described above, the communication system will be able to perform data communication with high efficiency.

While the invention has been described in detail with reference to particular embodiments for carrying out the same, it will be apparent to those skilled in the art that various modifications and alterations may be made to the invention without departing the sprit and scope of the same.

The present application is based on Japanese patent application No. 2003-118767 filed on April 23, 2002, and the contents of which are incorporated herein by reference.

### Industrial Applicability

The invention makes it possible to provide a multi-carrier communication apparatus capable for greatly increasing the amount of data per unit time with the frequency band width unchanged.

## Claims

1. A multi-carrier communication apparatus for transmitting data using a plurality of sub-carriers, comprising:
a determining unit which determines a pattern of particular signals associated with first data;
an allocating unit which allocates the determined pattern to sub-carriers of a matrix, the matrix is formed by arranging a plurality of sub-carriers arranged in a direction of a frequency axis in a direction of a time axis;
an allocating unit which allocates sub-carriers modulated by second data to a part of the matrix other than the particular signals; and
a transmitting unit which transmits the particular signals allocated to the matrix and the sub-carriers modulated by the second data.

2. A multi-carrier communication apparatus, comprising:
a detecting unit which detects a pattern of particular signals associated with first data which are allocated to sub-carriers of a matrix formed by arranging a plurality of sub-carriers arranged in a direction of a frequency axis obtained from received data in a direction of a time axis;
a restoring unit which restores the first data associated with the detected pattern; and
a demodulating unit which demodulates second data from sub-carriers which are modulated by the second data allocated to a part of the matrix other than the particular signals.

3. The multi-carrier communication apparatus as set forth in claim 1 or 2, wherein each of the plurality of sub-carriers arranged in the direction of the frequency axis has an orthogonal relationship with a sub-carrier adjacent thereto.
